# EUROPEAN PATENT APPLICATION

(11) **EP 2 692 414 A1**
(43) Date of publication of application: **05.02.2014**
(21) Application number: 12178493.8
(22) Date of filing: 30.07.2012
(51) Int. Cl.: B01D 53/26, B01D 53/28, F23J 15/00

(54) **A method of drying a wet carbon dioxide rich gas stream**

(71) Applicant: Alstom Technology Ltd, 5400 Baden (CH)
(72) Inventor: Becker, Thomas, 65396 Walluf (DE)

(57) **Abstract**

A method of drying a wet carbon dioxide rich gas stream is disclosed, wherein it comprises the steps of:
a) feeding a wet carbon dioxide rich gas stream into a dryer unit (1),
b) bringing the wet carbon dioxide rich gas stream in contact with a hygroscopic salt in the dryer unit (1), whereby a dry carbon dioxide rich gas stream and brine are formed,
c) withdrawing the dry carbon dioxide rich gas stream from the dryer unit (1), and
d) withdrawing the brine from the dryer unit (1),

as well as a system for said method of drying.

## Description

### Technical Field of the Invention

The present invention relates to a process for drying of a carbon dioxide rich gas stream with a hygroscopic salt and to a drying system for said method.

### Background

In several technologies and industries various gas streams, e.g. carbon dioxide gas streams, need to be dried with a view to achieving either product quality or to enabling further treatment. This also applies for carbon dioxide gas streams in different carbon capture processes and in connection with different combustion processes. For this drying purpose different dryer systems containing desiccants or absorbents are used. Existing dryer systems in use are glycol dryer systems and molecular sieve systems. Both of these systems require expensive equipment leading to high investment costs. In the glycol dryer system, the glycol is a hazardous fluid, and the costs for unavoidable glycol losses are high. Further, regeneration of loaded glycol is energy intensive and also requires cooling water. Moreover, the dried product will necessarily also contain traces of glycol. The molecule sieve systems require regeneration at a high temperature, i.e. more than 230 °C and are therefore substantially energy consuming, also requiring cooling water. Further, after the end of their life cycle molecular sieves have to be disposed. Silica gels may also be used in a drier system, but these show the same drawbacks as the molecular sieve systems.

Thus, there is a need for a dryer system for carbon dioxide rich gas streams which require a lower investment cost, which has no energy demand for regeneration, which includes a low cost desiccant being easy to handle, and which does not give rise to any critical waste stream or off-stream.

US 3390511 A discloses drying of air with a desiccant material in pellet form for drying, said desiccant material consisting of sodium chloride coated with calcium dichloride.

US 7008464 B2 discloses drying of natural gas using deliquescent salts in a dehydration tower and a system for avoiding recrystallization of the brine at the bottom of the dehydrator.

US 6453576 B2 discloses drying of natural gas using calcium chloride or lithium chloride as desiccant, suspended in an upright gas transmission line and producing an aqueous solution of the desiccant salts which is evacuated at the bottom of a sump area.

US 3334468 A discloses drying of gas streams using essentially calcium chloride with a minor amount of sodium chloride or sodium carbonate as an additive. The mixture thus obtained is formed to discrete masses used in a bed through which the gas stream to be dried is passed.

### Summary of the Invention

An object of the present invention is to provide a method for drying of a wet carbon dioxide rich gas stream lacking the above-mentioned drawbacks. This object has been achieved with a method of drying a carbon dioxide rich gas stream, wherein it comprises the steps of:
a) feeding a wet carbon dioxide rich gas stream into a dryer unit,
b) bringing the wet carbon dioxide rich gas stream in contact with a hygroscopic salt in the dryer unit, whereby a dry carbon dioxide rich gas stream and brine are formed,
c) withdrawing the dry carbon dioxide rich gas stream from the dryer unit, and
d) withdrawing the brine from the dryer unit.

According to one embodiment, the hygroscopic salt is chosen from calcium chloride, lithium chloride, magnesium chloride, magnesium sulfate, magnesium nitrate, carnallite, zinc chloride, ferric ammonium citrate, potassium bromide, potassium carbonate, potassium phosphate, potassium acetate, potassium hydroxide, potassium chloride, sodium sulfate, sodium hydroxide, and sodium chloride, and mixtures thereof.

According to one embodiment, the hygroscopic salt is halite, a mineral form of sodium chloride.

According to one embodiment, the wet carbon dioxide rich gas stream is a flue gas stream or an essentially pure carbon dioxide gas stream.

According to one embodiment, the flue gas stream contains at least 40%, preferably at least 50%, preferably at least 60%, more preferably at least 70% and most preferably at least 80%, of carbon dioxide.

According to one embodiment, the essentially pure carbon dioxide gas stream contains at least 80 % carbon dioxide, preferably at least 90 %, and most preferably at least 95 %.

According to one embodiment, any water droplets in the wet carbon dioxide rich gas stream are removed by use of a vapor-liquid separator arranged upstream of the dryer unit.

According to one embodiment, one or more wet carbon dioxide rich gas streams are dried in one or more redundant dryer units as a replacement of the drying action of the dryer unit during refilling thereof, or operating in parallel with the dryer unit.

According to one embodiment, any water droplets in a first dry carbon dioxide rich gas stream withdrawn from the dryer unit, in a second dry carbon dioxide rich gas stream withdrawn from said one or more redundant dryer units, or in a mixed dry carbon dioxide rich gas stream is removed by use of a complementary vapor-liquid separator arranged downstream of the dryer unit.

According to one embodiment, the vapor-liquid separator and the complementary vapor-liquid separator is a knock-out vessel.

According to one embodiment, the salt bed is a fixed bed.

According to one embodiment, the wet carbon dioxide rich gas stream is brought in contact with the hygroscopic salt in a salt bed supported by a salt bed support, preferably a tray, mesh, perforated plate, or grating.

The object of the present invention is also obtained with a system for the method for drying of a wet carbon dioxide rich gas stream, preferably a flue gas stream or an essentially pure carbon dioxide gas stream, wherein said system comprises a drier unit comprising a
a) a wet carbon dioxide rich gas stream inlet,
b) a salt bed comprising a hygroscopic salt,
c) a salt bed support,
d) a dry carbon dioxide rich gas stream outlet,
e) a lower compartment for collecting brine formed in the lower part of the dryer unit, and
f) a brine outlet.

According to one embodiment, said lower compartment for collecting brine comprises a section with a sight glass with a view to allowing observation of the level of brine formed.

According to one embodiment, said lower compartment for collecting brine comprises a level controller with a view to controlling the level of brine formed.

According to one embodiment, the wet carbon dioxide rich gas stream inlet is located below the salt bed, wherein the dry carbon dioxide rich gas stream outlet is located above the salt bed.

According to one embodiment, said system comprises a vapor-liquid separator arranged upstream of the dryer unit and/or a complementary vapor-liquid separator arranged downstream of the dryer unit with a view to removing any water droplets present in the gas stream or potential salt particles carry-over.

According to one embodiment, said system comprises one or more redundant dryer units with a view to drying one or more wet carbon dioxide rich gas streams as a replacement of the drying action of the dryer unit during refilling thereof, or with a view to drying one or more wet carbon dioxide rich gas streams in parallel with the dryer unit.

An oxy-fuel combustion power plant is also provided, wherein it comprises the drying system disclosed above, wherein the wet carbon dioxide rich gas stream is a flue gas stream.

The above descibed and other features are exemplified by the following figures and detailed description.

### Brief Description of the Drawings

Referring now to the figures, which are exemplary embodiments, and wherein the like elements are numbered alike:
Fig. 1 is a schematic view of a dryer unit 1 used in the drying method.
Fig. 2 is a schematic view of a system for drying of a wet carbon dioxide rich flue gas stream in an oxy-fuel process, wherein said system contais the dryer unit 1 shown in Fig. 1.
Fig. 3 is a schematic view of a system for drying of a wet carbon dioxide rich gas stream in a carbon capture process, wherein said system contains the dryer unit 1 in Fig. 1.

### Detailed Description

By the term "carbon dioxide rich" used throughout the application text is meant that the gas stream referred to contains at least 40 % by volume of carbon dioxide (CO₂). In the case when the carbon dioxide rich gas stream is a flue gas from a combustion process, the carbon dioxide concentration is at least 40 % by volume. Flue gas from a boiler in an oxy-fuel combustion process e.g. usually has a CO₂ concentration of about 50% by volume and the flue gas going into the compression is partly condensed already and thus e.g. usually has a CO₂ concentration of about 70-80% by volume.

By the term "essentially pure carbon dioxide gas stream" used throughout the application text is meant a gas stream having a carbon dioxide concentration of at least 80 %, e.g. 80-98 %. Such gas streams are produced in connection with different post carbon capture processes, and could be a gas stream obtained downstream of the absorbent regenerator or the CO₂ effluents of a cold-box in a oxy-combustion process scheme.

By the term "wet" used throughout the application text in connection with the expression "wet carbon dioxide rich gas stream" is meant that the gas stream contains at least 1 % water for the CAP (Chilled Ammonia Process) and the AAP (Advanced Amine Process), but for the oxy-fuel process the gas stream contains at least 17 % water. The water is present both in liquid and vapor form.

By the term "dry" used throughout the application text in connection with the expression "dry carbon dioxide rich gas stream" is meant that the dry gas stream contains at most 500 ppm, preferably at most 50 ppm, water when the gas stream has been obtained from a process in which an essentially pure carbon dioxide stream is produced, and at most 50 ppm, water when the gas stream has been obtained from a process in which a flue gas is produced.

The drying method and system is useful for drying in all kinds of carbon dioxide rich gas streams, e.g. in connection with different carbon capture technologies, including the CAP (Chilled Ammonia Process) and AAP (Advanced Amine Process), in which the carbon dioxide gas streams have a very high carbon dioxide content, e.g. up to 99.5 %, but also for drying of carbon dioxide containing flue gas streams, e.g. in the oxy-fuel process. Also, other carbon capture and storage processes may be subjected to and benefit from the present method and system, e.g. post combustion carbonate looping using limestone as adsorbent.

In the the oxy-fuel process a fuel, e.g. coal, is combusted in a power plant in an atmosphere consisting of pure oxygen (approximately 95 %) instead of air as primary oxidant as well as carbon dioxide. Such a gas mixture burns at a higher temperature than natural air, which results in a more efficient burning and in reduced fuel consumption. Further, the resultant flue gas is not diluted by nitrogen from the air, but primarily consists of carbon dioxide and water vapor. The water is easily condensable, leaving a highly concentrated carbon dioxide stream. The carbon dioxide rich gas stream obtained may partly be recycled to the combustion step, partly be subjected to further processing, e.g, compression, drying, or purification, and finally be transported to storage. An oxy-fuel combustion process produces approximately 75 % less flue gas than an air fueled combustion.

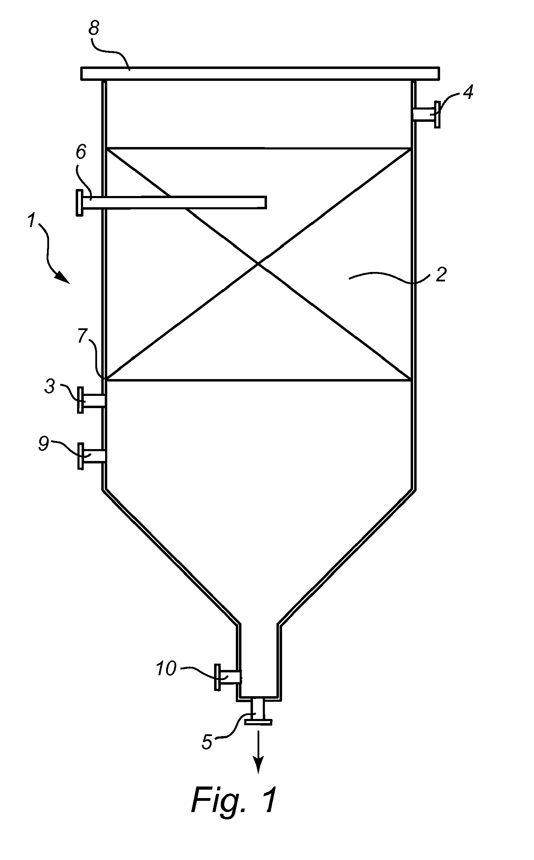

The dryer unit and the system involved in the drying method will now be disclosed more in detail with reference to Figs. 1-3.

Fig. 1 shows a dryer unit 1 comprising a salt bed 2, a wet carbon dioxide rich gas stream inlet 3, a dry carbon dioxide rich gas stream outlet 4, a brine outlet 5, a water analyzer 6, a salt bed support 7, a removable cover for salt refill 8, an upper liquid level measurement nozzle 9, and a lower liquid level measurement nozzle 10.

The dryer unit 1 may have the form of a vessel and is, or may be based on, any conventional dryer in the chemical industry. The salt in the dryer unit 1 is contained in a salt bed 2, which may be either fluidized or stationary during the drying operation. The salt bed 2 is supported by a salt bed support 7 which holds the salt bed 2 in place. The salt bed support 7 may e.g. have the form of a tray, mesh, perforated plate, or grating. It may also have any other structure that allows passage of brine formed in the salt bed 2 down to a lower compartment (not numbered in Fig. 1) located below the salt bed support 7, from which the brine is drained, and that physically separates the salt bed 2 from said lower compartment. The salt bed 2 may also have an upper restraint which allows passage of the treated carbon dioxide rich gas stream flowing upwards in the dryer unit 1 . The salt as such is hygroscopic and may be chosen from calcium chloride, lithium chloride, magnesium chloride, magnesium sulfate, magnesium nitrate, carnallite, zinc chloride, ferric ammonium citrate, potassium bromide, potassium carbonate, potassium phosphate, potassium acetate, potassium hydroxide, potassium chloride, sodium sulfate, sodium hydroxide, and sodium chloride, and mixtures thereof. These salts may also be present in their mineral forms. In one embodiment the salt is sodium chloride in the form of halite, also called rock salt. The salt bed 2 may also contain other components in addition to the salt having properties that promotes the drying operation in the dryer unit 1. The salt bed 2 may refilled with fresh salt by removing a removable cover for salt refill 8 located on top of the dryer unit 1.

In the drying method a wet carbon dioxide rich gas stream is fed to the wet carbon dioxide gas stream inlet 3 located in the of wall of the dryer unit 1 below the salt bed support 7 and is brought to to flow upwards through the salt bed 2. In the salt bed 2, which in one embodiment is fluidized, the hygroscopic salt absorbs water from the wet carbon dioxide. The hygroscopic salt in the salt bed 2 is thereby dissolved in the water present in the gas stream and forms a brine, which flows down from the salt bed 2, through the salt bed support 7 and further down to the lower compartment located below the salt bed support 7 in the lower end of the dryer unit 1. The brine collected in said lower compartment is then drained from the bottom of the dryer unit 1 through a brine outlet 5 and is disposed in a brine stream. Dry carbon dioxide formed in the salt bed 2 is collected in an upper compartment (not numbered in Fig.1 ) located above the salt bed 2 and above an optional upper salt bed restraint and is then withdrawn from the dryer unit 1 via a dry carbon dioxide rich gas stream outlet 4. The dry carbon dioxide rich gas stream leaving the dryer unit 1 may then be transported to another treatment step, use or disposal. In the dryer unit 1 a water analyzer 6 may be present in the salt bed 2 with a view to determining or controlling and detecting water breakthrough. The level of brine in said lower compartment of the dryer unit 1 may be regulated by a level controller (not shown in Fig. 1) arranged outside the dryer unit 1. Said level controller is connected with the upper liquid level measurement nozzle 9 arranged in the wall of the the upper part of said lower compartment located below the salt bed support 7 and with the lower liquid level measurement nozzle 10 in the wall of the lower part of said lower compartment, and above the brine outlet 5. For the regulation of the brine level a sight glass may also be provided in said lower compartment of the dryer unit 1.

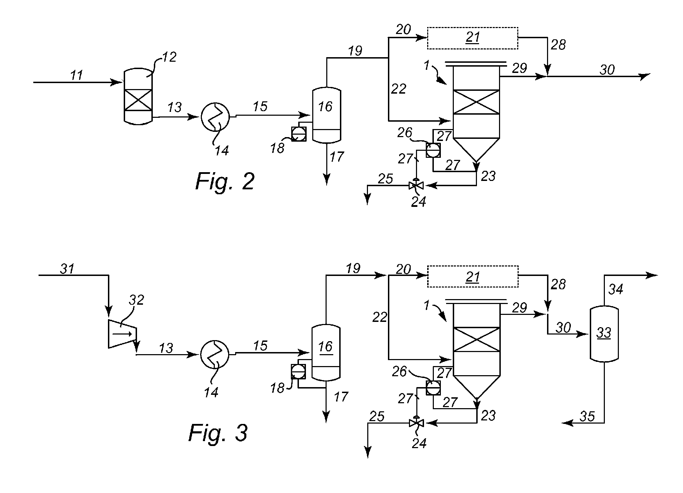

The drying method will now be disclosed with reference to Fig. 2 which is a schematic view of a system for drying of a wet carbon dioxide rich flue gas stream in an oxy-fuel process, wherein said system contains the dryer unit 1 shown in Fig.1. A wet carbon dioxide rich gas stream 11 is transported from a flue gas compressor (not shown in Fig. 2) to an absorber 12, e.g. a mercury (Hg) absorber, in which a wet carbon dioxide rich gas stream 13 with a reduced water content compared to the water content of the wet carbon dioxide gas stream 11 is obtained, which in turn is transported to a cooler 14. Said cooler 14 is cooled with e.g. chilled water, wherein a cooled wet carbon dioxide rich gas stream 15 having a reduced water content is formed. Said cooled wet carbon dioxide rich gas stream 15 having a reduced water content (also called gas stream 15 for short) is then transported to a vapor-liquid separator 16, e.g. a knockout drum, with a view to eliminating any water droplets (free water or water condensate) in said gas stream 15. Although the vapor-liquid separator 16 is shown in Fig. 2, the use thereof in the drying process is optional and is preferably used when further elimination of water droplets is deemed to be required. A separated liquid stream 17, more precisely a water condensate, is drained from the vapor-liquid separator 16. The level of liquid in the bottom of the vapor-liquid separator 16 is regulated via a level controller 18, which is connected to the vapor-liquid separator 16, to the separated liquid stream 17, and to a valve located further downstream of the separated liquid stream 17 (not shown in Fig. 2). The vapor separated in the vapor-liquid separator 16, i.e. a wet carbon dioxide rich gas stream 19 having a further reduced water content (also called gas stream 19 for short) compared to the wet carbon dioxide gas stream 15 having a reduced water content (the gas stream 15) is withdrawn from the top part of the vapor-liquid separator 16. Said gas stream 19 may then be divided into two separate streams, i.e. a first wet carbon dioxide rich gas stream 22 having a further reduced water content (also called first gas stream 22 for short), and a second wet carbon dioxide rich gas stream 20 having a further reduced water content (also called second gas stream 20 for short).

The first gas stream 22 is transported to a dryer unit 1, as also shown more in detail in Fig. 1 and as disclosed in detail above. A brine stream 23 is drained from the lower part of the dryer unit 1. A level controller 26 regulates the brine level and is connected via conduits 27 to the drier unit 1, to the brine stream 23, and to a valve 24 located further downstream in the brine stream 23. A brine waste stream 25 is transported to any further treatment, use or disposal.

Said second gas stream 20 is transported to one or more redundant dryer units 21 (only one dryer unit 21 is shown in Fig. 2), in which further drying of the second gas stream 20 takes place. Each redundant dryer unit 21 may be the same as the dryer unit 1, but may also differ. Said one or more redundant dryer units 21 are used when the dryer unit 1 not is in action, e.g. due to regeneration or refill of the salts in the salt bed 2, which are continuously dissolved during the drying operation and therefore sometimes need to be replaced with new salts. In such a way, the regeneration of the salt bed 2 may take place by switching the operation between the dryer unit 1 and said one or more redundant dryer units 21. If more than one redundant dryer is used, the second gas stream 20 is further divided into one stream for each redundant dryer unit 21. In one embodiment the dryer unit 1 and said one or more redundant dryer units 21 may be operated in parallel, thereby increasing the drying capacity of the system. Further, the use of said one or more redundant dryer units 21 is optional and is only used when it is deemed to be required. If not used, it is understood that the gas streams 20 and 28 do not exist.

A first dry carbon dioxide rich gas stream 29 is withdrawn from the dryer unit 1. When said one or more redundant dryer units 21 are used instead of the dryer unit 1, a second dry carbon dioxide rich stream 28 is withdrawn from said one or more redundant dryer units 21. When the dryer unit 1 and said one or more redundant dryer units 21 are used in parallel, said dry gas streams 29 and 28 are mixed, forming a mixed dry carbon dioxide rich gas stream 30. Said dry gas stream 29, said dry gas stream 28, or said mixed gas stream 30 is then transported to any further treatment, e.g. in a cold box, use, or disposal. The water content in the dry gas stream 29, 28, or 30 is less than 50 ppm.

The drying method will now be disclosed with reference to Fig. 3 which is a schematic view of a system containing the dryer unit shown in 1 in Fig. 1 and used for the drying of a wet carbon dioxide rich gas stream in carbon capture process, such as a CAP (Chilled Ammonia Process) or an APP (Advanced Amine Process).

In the drying method a wet carbon dioxide rich gas stream 31 containing carbon dioxide in a concentration of at least 80% e.g. at least 95%, is transported from an absorbent regenerator (not shown in Fig. 3) to a carbon dioxide compressor 32. A compressed wet carbon dioxide rich gas stream 13 is withdrawn from the carbon dioxide compressor 32 and is then treated in the same way as the wet carbon dioxide rich gas stream 13 with reduced water content disclosed in connection with the oxy-fuel process referred to in Fig. 2.

Thus, although the wet carbon dioxide rich gas streams 13 in Fig. 2 (flue gas stream from the oxy-fuel process) and Fig. 3 (essentially pure carbon dioxide gas stream from the CAP or AAP) may differ as to the composition of the gas, mainly in view of the carbon dioxide concentration, all of the subsequent equipment units and the process steps used are the same until the point in the process when the dry carbon dioxide rich gas stream 28, 29, or 30 has been obtained. However, some process parameter values in the different equipment units and operations may differ between the systems.

The dry carbon dioxide rich gas stream 29, 28, or 30, produced in the drying process disclosed in connection with Fig. 3, each having a water content of less than 500 ppm, may be further transported to a complementary vapor-liquid separator 33, e.g. a knock-out drum, from which a further dried carbon dioxide rich gas stream 34 is withdrawn from the top thereof and from which a separated liquid stream 35 (NNF, i.e. normally no flow) is drained in the bottom thereof. Usually no liquid should condense downstream the dryers 1, 21. The vapor-liquid separator 33 is used as a precaution to protect a compressor further down the line in case of any particle or liquid breakthrough. However, although shown in Fig. 3, the use of the complementary vapor-liquid separator 33 is optional and is only used when it is deemed to be required. Although not present in Fig. 2 showing a system for the oxy-fuel process, such a complementary vapor-liquid separator 33 may also be used in that process.

Compared to prior art techniques, the method and system disclosed here for drying of a wet carbon dioxide rich gas stream provides a system containing an absorbent which is easier to handle, which reduces the costs of the dryer involved, which does not give rise to any critical waste streams, and which requires lower regeneration energy. Further, also the total system costs are reduced.

While the invention has been described with reference to various exemplary embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention will include all embodiments falling within the scope of the appended claims.

## Claims

1. A method of drying a wet carbon dioxide rich gas stream, wherein it comprises the steps of:
a) feeding a wet carbon dioxide rich gas stream into a dryer unit (1),
b) bringing the wet carbon dioxide rich gas stream in contact with a hygroscopic salt in the dryer unit (1), whereby a dry carbon dioxide rich gas stream and brine are formed,
c) withdrawing the dry carbon dioxide rich gas stream from the dryer unit (1), and
d) withdrawing the brine from the dryer unit (1).

2. The method according to claim 1, wherein the hygroscopic salt is chosen from calcium chloride, lithium chloride, magnesium chloride, magnesium sulfate, magnesium nitrate, carnallite, zinc chloride, ferric ammonium citrate, potassium bromide, potassium carbonate, potassium phosphate, potassium acetate, potassium hydroxide, potassium chloride, sodium sulfate, sodium hydroxide, and sodium chloride, and mixtures thereof.

3. The method according to claim 2, wherein the hygroscopic salt is halite, a mineral form of sodium chloride.

4. The method according to any one of claims 1-3, wherein the wet carbon dioxide rich gas stream is a flue gas stream or an essentially pure carbon dioxide gas stream.

5. The method according to claim 4, wherein the flue gas stream contains at least 40%, preferably at least 50%, preferably at least 60%, more preferably at least 70%, and most preferably at least 80%, of carbon dioxide.

6. The method according to claim 4, wherein the essentially pure carbon dioxide gas stream contains at least 80% carbon dioxide, preferably at least 90%, and most preferably at least 95%.

7. The method according to any one of claims 1-6, wherein any water droplets in the wet carbon dioxide rich gas stream are removed by use of a vapor-liquid separator (16) arranged upstream of the dryer unit (1).

8. The method according to any one of claims 1-7, wherein one or more wet carbon dioxide rich gas streams are dried in one or more redundant dryer units (21) as a replacement of the drying action of the dryer unit (1) during refilling thereof, or operating in parallel with the dryer unit (1).

9. The method according to any one of claims 1-7, wherein any water droplets in a first dry carbon dioxide rich gas stream (29) withdrawn from the dryer unit (1), in a second dry carbon dioxide rich gas stream (28) withdrawn from said one or more redundant dryer units (21), or a mixed dry carbon dioxide rich gas stream (30) is removed by use of a complementary vapor-liquid separator (33) arranged downstream of the dryer unit (1).

10. The method according to claim 7 or 9, wherein the vapor-liquid separator (16) and the complementary vapor-liquid separator (33) is a knock-out vessel.

11. The method according to any one of the preceding claims, wherein the salt bed (2) is a fixed bed.

12. The method according to claim 1, wherein the wet carbon dioxide rich gas stream is brought in contact with the hygroscopic salt in a salt bed (2) supported by a salt bed support (7), preferably a tray, mesh, perforated plate, or grating.

13. A system for the method according to any one of claims 1-12 for drying of a wet carbon dioxide rich gas stream, preferably a flue gas stream or an essentially pure carbon dioxide gas stream, wherein it comprises a drier unit (1) comprising a
e) a wet carbon dioxide rich gas stream inlet (3),
f) a salt bed (2) comprising a hygroscopic salt,
g) a salt bed support (7),
h) a dry carbon dioxide rich gas stream outlet (4),
i) a lower compartment for collecting brine formed in the lower part of the dryer unit (1), and
j) a brine outlet (5).

14. The system according to claim 13, wherein said lower compartment for collecting brine comprises a section with a sight glass with a view to allowing observation of the level of brine formed.

15. The system according to claim 13 and 14, wherein said lower compartment for collecting brine comprises a level controller (26) with a view to controlling the level of brine formed.

16. The system according to any one of claims 13-15, wherein the wet carbon dioxide rich gas stream inlet (3) is located below the salt bed (2), and wherein the dry carbon dioxide rich gas stream outlet (4) is located above the salt bed (2).

17. The system according to any one of claims 13-16, wherein it comprises a vapor-liquid separator (16) arranged upstream of the dryer unit (1) and/or a complementary vapor-liquid separator (33) arranged downstream of the dryer unit (1) with a view to removing any water droplets present in the gas stream.

18. The system according to any one of claims 13-17, wherein it comprises one or more redundant dryer units (21) with a view to drying one or more wet carbon dioxide rich gas streams as a replacement of the drying action of the dryer unit (1) during refilling thereof, or with a view to drying one or more wet carbon dioxide rich gas streams in parallel with the dryer unit (1).

19. An oxy-fuel combustion power plant comprising the drying system according to any one of claims 13-18, wherein the wet carbon dioxide rich gas stream is a flue gas stream.
